(19) **Europäisches Patentamt**

**European Patent Office**

**Office européen des brevets**

(11) **EP 1 288 682 B1**

(12) **FASCICULE DE BREVET EUROPEEN**

(45) Date de publication et mention
de la délivrance du brevet:
**07.06.2006 Bulletin 2006/23**

(51) Int Cl.:
***G02B 6/02*** (2006.01)

(21) Numéro de dépôt: **01402229.7**

(22) Date de dépôt: **27.08.2001**

(54) **Fibre optique pour système de transmission à multiplexage en longueurs d'onde**

Optische Faser für Wellenlängenmultiplex-Übertragungssystem

Optical fiber for wavelength division multiplexing system

(84) Etats contractants désignés:
**AT BE CH CY DE DK ES FI FR GB GR IE IT LI LU MC NL PT SE TR**

(30) Priorité: **23.08.2001 FR 0111047**

(43) Date de publication de la demande:
**05.03.2003 Bulletin 2003/10**

(73) Titulaire: **Draka Comteq B.V.**
**1018 TX Amsterdam (NL)**

(72) Inventeurs:
• **De Montmorillon, Louis-Anne**
**75017 Paris (FR)**
• **Nouchi, Pascale**
**78600 Maisons Laffite (FR)**
• **Fleury, Ludovic**
**78390 Bois d'Arcy (FR)**
• **Sillard, Pierre**
**78150 Le Chesnay (FR)**
• **Beaumont, Florent**
**78700 Conflans Ste Honorine (FR)**
• **Gorlier, Maxime**
**75017 Paris (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 260 795**    **EP-A- 0 992 818**
**EP-A- 1 116 970**    **DE-A- 19 839 870**
**FR-A- 2 790 107**

## Description

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 40Gbit/s ou à 160Gbit/s ; l'objectif est d'obtenir, pour toutes les valeurs de longueurs d'onde du multiplex, une dispersion chromatique cumulée sensiblement nulle sur la liaison, de sorte à limiter l'élargissement des impulsions. Une valeur cumulée de quelques dizaines de ps/nm pour la dispersion est en général acceptable. Il est aussi intéressant d'éviter au voisinage des longueurs d'onde utilisées dans le système les valeurs nulles de la dispersion chromatique locale, pour lesquelles les effets non-linéaires sont plus importants. En outre, il est aussi intéressant de limiter la pente de dispersion chromatique cumulée sur la plage du multiplex de sorte à éviter ou limiter les distorsions entre les canaux du multiplex. Cette pente est classiquement la dérivée de la dispersion chromatique par rapport à la longueur d'onde. Enfin il faut également tenir compte du fait que l'amplitude des effets non-linéaires dans une fibre est inversément proportionnelle à la surface effective de la fibre. La surface effective devrait donc idéalement être choisie la plus élevée possible pour limiter les effets non-linéaires. Cependant, certains effets non-linéaires, tels que l'effet Raman, sont utiles pour améliorer les marges des systèmes de transmission.

On utilise classiquement comme fibre de ligne pour les systèmes de transmission à fibres optiques des fibres à saut d'indice, appelées aussi fibres SMF (acronyme de l'anglais "Single Mode Fiber"). La demanderesse commercialise ainsi sous référence ASMF 200 une fibre monomode à saut d'indice présentant une longueur d'onde $\lambda_0$ d'annulation de la dispersion chromatique entre 1300 et 1320 nm, et une dispersion chromatique inférieure ou égale à 3,5 ps/(nm.km) dans une plage de 1285-1330 nm, et de l'ordre de 17 ps/(nm.km) à 1550 nm. La pente de dispersion chromatique à 1550 nm est de l'ordre de 0,06 ps/(nm$^2$.km). Cette fibre présente typiquement un rapport C/C' de la dispersion chromatique à la pente de dispersion chromatique avec une valeur entre 250 et 370 nm à 1550 nm. Cette fibre présente une surface effective à 1550 nm voisine de 80 $\mu$m$^2$.

Sont aussi apparues sur le marché des fibres à dispersion décalée, ou DSF (acronyme de l'anglais "Dispersion shifted fibers"). On qualifie de NZ-DSF+ (acronyme de l'anglais "non-zero dispersion shifted fibers") des fibres à dispersion décalée, présentant une dispersion chromatique non-nulle et positive pour les longueurs d'onde auxquelles elles sont utilisées, typiquement autour de 1550 nm. Ces fibres présentent pour ces longueurs d'onde une dispersion chromatique faible, typiquement inférieure à 1ps/(nm.km) à 1550 nm, et une pente de dispersion chromatique entre 0,04 et 0,1 ps/(nm$^2$.km).

FR-A-2 790 107 propose une fibre de ligne, tout particulièrement adaptée à une transmission à multiplexage en longueurs d'onde dense, avec un espacement entre les canaux de 100 GHz ou moins pour un débit par canal de 10 Gbit/s; cette fibre présente pour une longueur d'onde de 1550 nm une surface effective supérieure ou égale à 60 $\mu$m$^2$, une dispersion chromatique comprise entre 6 et 10 ps/(nm.km), et une pente de dispersion chromatique inférieure à 0,07 ps/(nm$^2$.km). La demanderesse commercialise sous la référence TeraLight une fibre qui présente à 1550 nm une dispersion chromatique typique de 8 ps/(nm.km) et une pente de dispersion chromatique de 0,058 ps/(nm$^2$.km). Le rapport entre la dispersion chromatique et la pente de dispersion chromatique de cette fibre est de 140 nm. Cette fibre présente une surface effective $S_{eff}$ de l'ordre de 65 $\mu$m$^2$, et une pente de surface effective de l'ordre de 0,17 %/nm. FR-A-2 795 828 décrit une fibre de compensation de dispersion adaptée à cette fibre de ligne.

Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en langue anglaise). Des fibres DCF sont décrites dans différents brevets. Elles présentent au voisinage d'une longueur d'onde de 1550 nm une dispersion chromatique négative, pour compenser la dispersion chromatique cumulée dans la fibre de ligne, et peuvent en outre présenter une pente de la dispersion chromatique négative pour compenser la pente positive de la dispersion chromatique de la fibre de ligne. US-A-5 568 583 ou US-A-5 361 319 proposent une fibre DCF pour la compensation de la dispersion chromatique d'une fibre SMF, d'une dispersion de l'ordre de 17 ps/(nm.km) à 1550 nm. Les fibres de compensation de dispersion présentent en général un coût supérieur à la fibre de ligne, et une atténuation importante.

Il est donc intéressant de disposer d'une fibre de ligne, qui nécessite une longueur aussi faible que possible de fibre de compensation de dispersion; un autre problème technique est de disposer d'une fibre qui permette une transmission sur une bande aussi large que possible.

La demande de brevet français déposée le 24.02.2000 par la demanderesse, sous le numéro 00 02 316, ayant pour titre "Fibre optique monomode en câble pour réseaux de transmission à fibre optique à multiplexage en longueurs d'onde" décrit une fibre optique qui est utilisée comme fibre de ligne, et dont la dispersion chromatique est compensée par de la fibre de compensation de dispersion classiquement utilisée pour une fibre à saut d'indice. Cette fibre présente pour une longueur d'onde de 1550 nm une dispersion chromatique comprise entre 5 et 11 ps/(nm.km), un rapport entre la dispersion chromatique et la pente de dispersion chromatique entre 250 et 370 nm, une surface effective au moins égale à 50 $\mu$m$^2$ et un rapport entre le carré de la surface effective et la pente de dispersion chromatique supérieur à 80000 $\mu$m$^4$.nm$^2$.km/ps. Cette demande de brevet ne mentionne aucunement la pente de surface effective de la fibre, et n'indique pas les avantages qu'une telle pente peut présenter.

DE-A-198 39 870 traite le problème de la stabilité de la surface effective par rapport à la longueur d'onde.

L'invention propose une fibre qui simplifie la gestion des longueurs d'onde. Elle peut notamment être utilisée comme fibre de ligne dans des systèmes de transmission à multiplexage en longueurs d'onde; par rapport à une fibre SMF de l'état de la technique, cette fibre de ligne peut être compensée en dispersion par une longueur plus faible de fibre de compensation de dispersion. En outre, cette fibre est adaptée à une utilisation sur une large bande, sans variations sensibles de propriétés de transmission de la fibre.

Plus précisément, l'invention propose une fibre optique selon la revendication 1.

La fibre présente en outre avantageusement une ou plusieurs des caractéristiques optiques suivantes :

- la fibre est monomode en câble, dans une plage de longueurs d'onde à partir de 1460 nm, et de préférence à partir de 1300 nm ;
- une longueur d'onde de coupure théorique inférieure ou égale à 1850 nm et de préférence 1800 nm ;
- une longueur d'onde $\lambda_0$ d'annulation de la dispersion chromatique inférieure ou égale à 1370 nm ;
- à une longueur d'onde de 1550 nm, une surface effective supérieure ou égale à 50 $\mu$m$^2$ ;
- à une longueur d'onde de 1460 nm une surface effective supérieure ou égale à 45 $\mu$m$^2$ ;
- des pertes par courbure inférieures ou égales à 400 dB/m pour un enroulement autour d'un manchon de 10 mm de rayon, pour une longueur d'onde de 1625 nm, et de préférence pour une longueur d'onde de 1675 nm ;
- des pertes par courbure inférieures à 0,5 dB, et de préférence inférieures à 5.10$^{-2}$ dB, pour une longueur d'onde de 1625 nm, et de préférence pour une longueur d'onde de 1675 nm, pour un enroulement de 100 tours sur un manchon de 30 mm de rayon ;
- à une longueur d'onde de 1550 nm, une dispersion modale de polarisation inférieure ou égale à 0,1 ps/km$^{1/2}$ et de préférence 0,05 ps/km$^{1/2}$ ;
- à une longueur d'onde de 1550 nm, une atténuation inférieure à 0,24 dB/km, voire à 0,22 dB/km ;
- à une longueur d'onde de 1550 nm un rapport du carré de la surface effective à la pente de dispersion chromatique supérieure ou égal à 80 000 $\mu$m$^4$.nm.km/ps ;
- à une longueur d'onde de 1550 nm une sensibilité aux microcourbures inférieure à 1 et de préférence inférieure à 0,8 ;

La fibre présente un profil d'indice en trapèze ou rectangle avec une tranchée enterrée et un anneau. Ce profil présente avantageusement une ou plusieurs des caractéristiques suivantes :

- la différence ($\Delta n_1$) entre l'indice du trapèze ou du rectangle et l'indice de la gaine est comprise entre 5,9.10$^{-3}$ et 7,8.10$^{-3}$, et le rayon ($r_1$) de la partie de la fibre présentant un indice supérieur à celui de la gaine est compris entre 3,5 et 4,5 $\mu$m ;
- la différence ($\Delta n_2$) entre l'indice de la tranchée déprimée et l'indice de la gaine est comprise entre -8.10$^{-3}$ et -1.10$^{-3}$, et le rayon extérieur ($r_2$) de cette tranchée est compris entre 5,3 et 8,1 $\mu$m ;
- la différence ($\Delta n_3$) entre l'indice de l'anneau et l'indice de la gaine est comprise entre 1.10$^{-3}$ et 8.10$^{-3}$ et le rayon extérieur ($r_3$) de cet anneau est compris entre 7,2 et 11,1 $\mu$m ;
- le rapport entre le rayon intérieur et le rayon extérieur du trapèze est supérieur à 0,4;
- le rapport entre le rayon intérieur et le rayon extérieur du trapèze est inférieur à 0,95, voire inférieur à 0,90, ou de préférence inférieur à 0,80 ;
- le double de l'intégrale du produit du rayon par l'indice entre un rayon nul et le rayon ($r_1$) extérieur de la partie centrale de la fibre présentant un indice supérieur à celui de la gaine est compris entre 76.10$^{-3}$ et 114.10$^{-3}$ $\mu$m$^2$ ;
- le double de l'intégrale de l'indice entre un rayon nul et le rayon ($r_1$) extérieur de la partie centrale de la fibre présentant un indice supérieur à celui de la gaine est compris entre 46.10$^{-3}$ et 56.10$^{-3}$ $\mu$m$^2$ ;
- le double de l'intégrale du produit du rayon par l'indice entre le rayon ($r_1$) extérieur de la partie centrale de la fibre présentant un indice supérieur à celui de la gaine et le rayon intérieur ($r_2$) de l'anneau est compris entre -170.10$^{-3}$ et -40.10$^{-3}$ $\mu$m$^2$ ;

- le double de l'intégrale du produit du rayon par l'indice entre le rayon intérieur ($r_2$) et le rayon extérieur ($r_3$) de l'anneau est compris entre $72.10^{-3}$ et $198.10^{-3}$ $\mu m^2$ ;
- le double de l'intégrale du produit du rayon par l'indice entre le rayon ($r_1$) extérieur de la partie centrale de la fibre présentant un indice supérieur à celui de la gaine et le rayon extérieur ($r_3$) de l'anneau est compris entre $-38.10^{-3}$ et $90.10^{-3}$ $\mu m^2$;

L'invention propose encore un système de transmission à multiplexage en longueurs d'onde, comprenant une telle fibre comme fibre de ligne.

D'autres caractéristiques et avantages de l'invention apparaîtront à la lecture de la description qui suit de modes de réalisation de l'invention, donnés à titre d'exemple et en référence aux dessins annexés, qui montrent

- figure 1, une représentation schématique d'un système de transmission;
- figure 2, une représentation schématique du profil d'indice de consigne d'une fibre selon un premier mode de réalisation de l'invention;
- figure 3, un graphe représentant l'évolution, relative à 1550 nm, de la surface effective en fonction de la longueur d'onde pour une fibre selon l'invention et une fibre de l'état de la technique.

L'invention propose une fibre présentant, à une longueur d'onde de 1550 nm, une dispersion chromatique comprise entre 5 et 11 ps/(nm.km), un rapport entre la dispersion chromatique et la pente de dispersion chromatique compris entre 250 et 370 nm, une surface effective supérieure à 50 $\mu m^2$ et une dérivée de la surface effective par rapport à la longueur d'onde inférieure ou égale à 0,14 %/nm.

La valeur de la dispersion chromatique est plus faible qu'une fibre SMF, ce qui permet de limiter la longueur de fibre de compensation de dispersion, et donc l'atténuation dûe à cette fibre ; la valeur de la dispersion chromatique est également suffisament élevée pour limiter les distorsions entre les canaux. La valeur du rapport entre la dispersion chromatique et la pente de dispersion chromatique permet, dans un système de transmission, de compenser la dispersion chromatique et la pente de dispersion chromatique cumulées dans la fibre à l'aide d'une fibre de compensation de dispersion de l'état de la technique adaptée à la compensation de la dispersion dans une fibre à saut d'indice ; cette valeur du rapport assure également des variations limitées de la dispersion chromatique sur une large bande de longueurs d'onde. En outre, la fibre présente une pente de surface effective inférieure à 0,14 %/nm; cette valeur de la pente de surface effective assure que les variations de la surface effective dans la plage de longueurs d'onde du système de transmission conduisent à des variations faibles des effets non-linéaires sur la plage de longueurs d'onde utilisée dans un système de transmission.

En outre, la valeur proposée de la pente de surface effective permet d'éviter de traiter chaque longueur d'onde du système de transmission au cas par cas. L'utilisation d'une fibre dont la dispersion et la surface effective varient peu en fonction de la longueur d'onde est donc avantageuse. Cet avantage devient d'autant plus critique que l'on souhaite transmettre sur une plage de longueurs d'onde étendue. On entend dans ce contexte par large bande une plage de longueurs d'onde qui couvre au moins deux des bandes S, C, L et XL définies plus bas.

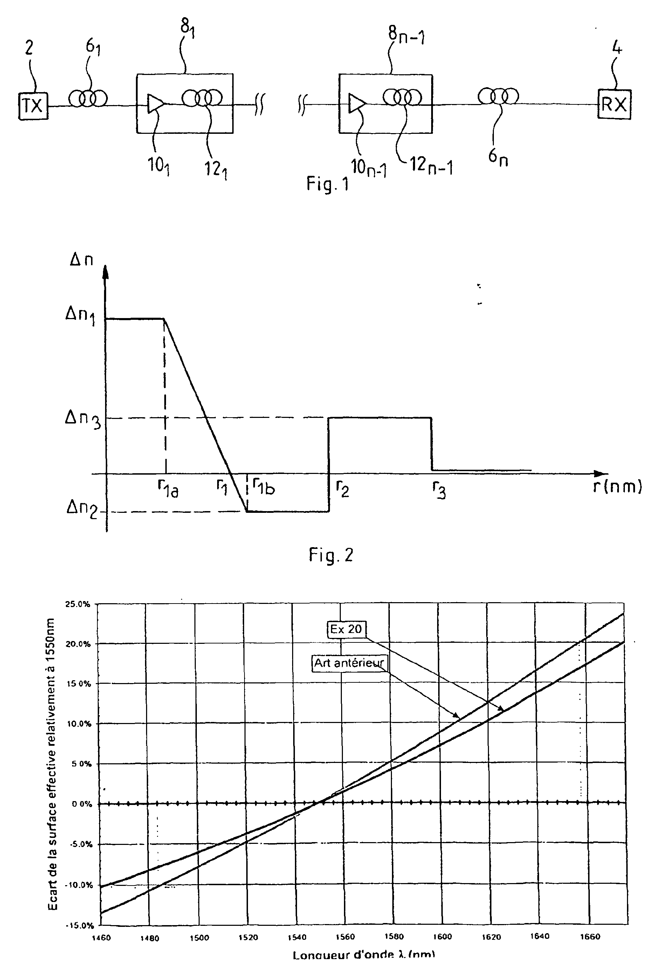

La figure 1 montre une représentation schématique d'un système de transmission à multiplexage en longueurs d'onde. On a représenté à la figure 1 l'émetteur TX 2 et le récepteur RX 4 du système de transmission, entre lesquels s'étend la fibre de ligne. La fibre de ligne est formée de tronçons $6_1$ à $6_n$, séparés par des répéteurs $8_1$ à $8_{n-1}$; chaque répéteur $8_i$ présente un amplificateur $10_i$, dont la structure est sans incidence sur le fonctionnement de l'invention, et n'est donc pas décrite. En sortie de l'amplificateur est prévue une section $12_i$ de fibre de compensation de dispersion. Placer la fibre de compensation de dispersion en aval de l'amplificateur permet de limiter les effets d'une forte atténuation dans cette fibre. Des modifications au système de transmission de la figure 1 sont possibles : ainsi, peuvent être prévus des filtres, un amplificateur en aval de la fibre de compensation de dispersion, etc. On pourrait aussi utiliser la fibre de compensation de dispersion comme fibre de ligne, au lieu qu'elle soit disposée dans un répéteur.

Dans un système du type de celui de la figure 1, la fibre de ligne peut comprendre de la fibre NZ-DSF+ du type décrit dans FR-A-2 790 107; cette fibre présente une dispersion chromatique voisine de 8 ps/(nm.km). L'exemple proposé dans FR-A-2 795 828 pour la compensation de la dispersion chromatique d'une telle fibre est le suivant. La fibre de ligne présente, pour une longueur d'onde de 1550 nm, une dispersion chromatique de 8 ps/(nm.km) et une pente de dispersion chromatique de 0,055 ps/(nm².km). Le rapport de la dispersion chromatique à la pente de dispersion chromatique est de 145 nm. La fibre de compensation de dispersion présente, toujours pour une longueur d'onde de 1550 nm, une dispersion chromatique voisine de -51 ps/(nm.km) et une pente de dispersion chromatique de -0,035 ps/(nm².km, avec donc un même rapport de la dispersion chromatique à la pente de dispersion chromatique (145 nm). Dans cet exemple, une longueur de 14 km de fibre de compensation de dispersion permet de compenser 86 km de fibre de ligne.

La fibre de ligne dans l'exemple de la figure 1 peut aussi être une fibre selon l'exemple 20 du tableau 1 ci-dessous; cette fibre présente, à une longueur d'onde de 1550 nm, les caractéristiques de propagation indiquées dans le tableau 2 ci-dessous, à savoir :

- une dispersion chromatique de 8 ps/(nm.km);

- une pente de dispersion chromatique de 0,031 ps/(nm$^2$.km).

Comme le rapport C/C' entre la dispersion chromatique et la pente de dispersion chromatique est voisin du rapport C/C' de la fibre à saut d'indice, il est possible d'utiliser pour compenser la dispersion chromatique la fibre de compensation de dispersion utilisée dans l'état de la technique pour la compensation de la dispersion chromatique d'une fibre SMF; on peut notamment utiliser des fibres de compensation de dispersion vendues par la société LUCENT sous la dénomination DK-modules (DK-40 ; DK-60 ; DK-80) ayant un taux de compensation compris entre 80% et 120%, pour une fibre SMF ayant, à 1550nm, une dispersion de 17 ps/(nm.km) et une pente de 0,055 ps/(nm$^2$.km), ce qui correspond à un rapport dispersion sur pente compris entre 250 nm et 370 nm.

En outre, la fibre de l'exemple 20 du tableau 1 présente, pour une longueur d'onde de 1550 nm, une pente de surface effective de 0,13 %/nm. Cette valeur est inférieure à celle de la fibre TeraLight considérée à titre de comparaison. Pour la fibre du tableau 1, les variations de la surface effective sont donc plus faibles dans la plage de longueurs d'onde utilisée dans le système de transmission. Dans l'exemple d'un système de transmission à multiplexage en longueurs d'onde fonctionnant en bande C, c'est-à-dire entre 1530 et 1565 nm, les variations de surface effective sur la largeur de bande dans la fibre TeraLight considérée à titre d'exemple sont de l'ordre de -3,2% à +2,5 %; pour la fibre du tableau 1 considérée dans cette comparaison, les variations sont de -2,5 à +2,0%.

On appelle bande L la plage de longueurs d'onde qui s'étend au dessus de la bande C, jusqu'à des longueurs d'onde de l'ordre de 1620 ou 1625 nm. On appelle bande S la plage de longueurs d'onde qui s'étend en-dessous de la bande C, sur des longueurs d'onde de 1460 à 1530 nm. On appelle bande XL la plage de longueurs d'onde qui s'étend au dessus de la bande L, jusqu'à des longueurs d'onde de l'ordre de 1675 nm.

Un système de transmission dans les bandes S, C, L et XL utilise donc typiquement des longueurs d'onde entre 1460 et 1675 nm. Dans un tel système, les variations de surface effective sur la largeur de bande dans la fibre Teralight considérée à titre d'exemple sont de l'ordre de -13,5% à +23,7% %; pour la fibre du tableau 1 considérée dans cette comparaison, les variations sont de -10,3 à +20,1%.

La fibre de l'invention permet d'obtenir, pour tous les canaux de la bande de 1460 à 1675 nm et pour une puissance par canal donnée, des variations des effets non-linéaires d'une amplitude comparable à ceux obtenus sur Teralight dans une bande de 1484 à 1657 nm. Il est donc possible d'utiliser la fibre de l'invention sur une bande plus large, sans pour autant devoir adapter les équipements existants.

Outre les caractéristiques mentionnées plus haut, il est avantageux que la fibre présente une ou plusieurs des caractéristiques suivantes:

- un comportement monomode en câble au moins à partir de 1460 nm, et de préférence, pour des longueurs d'onde supérieures ou égales à 1300 nm;
- une surface effective supérieure ou égale à 50 $\mu$m$^2$ à une longueur d'onde de 1550 nm;
- une surface effective supérieure ou égale à 45 $\mu$m$^2$ à une longueur d'onde de 1460 nm;
- une longueur d'onde $\lambda_0$ d'annulation de la dispersion chromatique inférieure ou égale à 1370 nm;
- des pertes par courbure inférieures à 400 dB/m pour une longueur d'onde inférieure à 1625 nm, et de préférence inférieure à 1675 nm, lorsque la fibre est enroulée sur un manchon de 10 mm de rayon;
- des pertes par courbure inférieures à 0,5 dB, et de préférence inférieures à 5.10$^{-2}$ dB, pour une longueur d'onde inférieure à 1625 nm, et de préférence inférieure à 1675 nm, pour un enroulement de 100 tours sur un manchon de 30 mm de rayon;
- une sensibilité aux micro-courbures inférieure ou égale à 1, et de préférence inférieure ou égale à 0,8 pour une longueur d'onde de 1550 nm;
- une dispersion modale de polarisation inférieure ou égale à 0,1 ps/km$^{1/2}$, et de préférence inférieure ou égale à 0,05 ps/km$^{1/2}$, pour une longueur d'onde de 1550 nm;
- une atténuation inférieure à 0,24 dB/km et de préférence à 0,22 dB/km pour une longueur d'onde de 1550 nm.

Le fait que la fibre soit monomode en câble pour des longueurs d'onde supérieures à 1460 nm voire à 1300 nm lui permet d'assurer une propagation monomode des canaux du multiplex. ITU-T G 650 donne une définition de la longueur d'onde de coupure en câble. La longueur d'onde de coupure théorique de la fibre est généralement supérieure de plusieurs centaines de nanomètres à la longueur d'onde de coupure en câble. Il apparaît en fait que la propagation dans une fibre optique en câble peut être monomode, même si la longueur d'onde de coupure théorique est supérieure à la longueur d'onde des signaux utilisés : de fait, au-delà d'une distance de quelques mètres ou dizaines de mètres, qui est faible devant les distances de propagation dans les réseaux de transmission à fibre optique, les modes secondaires disparaissent du fait d'un affaiblissement trop important. La propagation dans le système de transmission est alors monomode. On pourrait donc aussi remplacer ce critère par un critère sur la longueur d'onde de coupure théorique, qui pourrait être inférieure à 1850 nm, voire inférieure à 1800 nm.

La borne proposée sur la surface effective assure que les effets non-linéaires restent supportables dans la fibre de ligne, sur la plage de longueurs d'onde utilisée dans le système de transmission.

La borne sur la longueur d'onde d'annulation de la dispersion chromatique assure que la dispersion chromatique ne s'annule pas dans la plage, et limite aussi les effets non-linéaires dans la plage de longueurs d'onde utilisée dans le système de transmission.

La borne sur les pertes par courbures et les pertes par microcourbures permettent notamment à la fibre de présenter un comportement satisfaisant lorsqu'elle est intégrée dans un câble. On notera que les pertes par courbures sont une fonction croissante de la longueur d'onde et que la borne proposée revient à appliquer une borne sur toute la plage. Ces bornes sont représentatives de la câblabilité de la fibre. On évalue la sensibilité aux courbures comme expliqué dans la recommandation ITU-T G 650, en mesurant l'atténuation provoquée par l'enroulement de 100 tours d'une fibre autour d'un manchon de rayon 30 mm, ou encore par enroulement de la fibre autour d'un manchon de 10 mm de rayon. La sensibilité aux microcourbures est mesurée de façon connue en soi ; on peut comme dans la suite la mesurer par rapport à une fibre telle que la fibre commercialisée par la demanderesse sous la référence ASMF 200. Ces contraintes sont de préférence respectées dans toute la plage de longueurs d'onde utilisée dans le système de transmission.

La fibre présente en outre avantageusement une dispersion modale de polarisation inférieure ou égale à 0,1 $ps/km^{1/2}$; cette valeur de la dispersion modale de polarisation assure une bonne transmission pour les hauts débits; elle est mesurée au voisinage d'une longueur d'onde de 1550 nm.

La fibre peut aussi présenter une atténuation inférieure à 0,24 dB/km, voire à 0,22 dB/km; ces valeurs d'atténuation limitent les pertes dans la fibre; elles sont mesurées au voisinage d'une longueur d'onde de 1550nm.

On donne maintenant des exemples de fibre vérifiant ces différentes caractéristiques, ayant respectivement comme profil un profil trapèze et anneau ou un profil en rectangle et anneau.

La fibre peut présenter le profil de la figure 2, avec les valeurs données dans les tableaux ci-dessous. Le profil de la figure 2 est un profil d'indice de consigne du type en trapèze, avec une tranchée enterrée et un anneau. Il présente, en partant du centre de la fibre:

- une partie centrale avec un indice sensiblement constant supérieur ou égal à l'indice de la gaine;
- une partie avec un indice décroissant sensiblement linéairement depuis cette indice sensiblement constant supérieur ou égal à l'indice de la gaine jusqu'à un indice inférieur ou égal à l'indice de la gaine
- une partie annulaire présentant un indice sensiblement constant, dont la valeur est inférieure ou égale à celle de l'indice de la gaine ;

l'ensemble constituant un profil d'indice dit "en trapèze avec une tranchée enterrée ou déprimée".

Autour de la tranchée enterrée, la fibre de la figure 2 présente un anneau, c'est-à-dire une partie d'indice supérieur à l'indice de la gaine, d'où le qualificatif de profil en trapèze avec une tranchée enterrée et un anneau.

On peut aussi prévoir un profil en rectangle avec une tranchée enterrée et un anneau; par rapport au profil en trapèze et anneau, la fibre présente alors

- une partie centrale avec un indice sensiblement constant supérieur ou égal à l'indice de la gaine;
- une partie annulaire présentant un indice sensiblement constant avec une valeur d'indice inférieur ou égal à l'indice de la gaine ;

l'ensemble constituant un profil d'indice dit "en rectangle avec une tranchée enterrée ou déprimée", et étant entouré d'un anneau.

On note dans la suite $\Delta n_1$ la différence entre l'indice de la partie centrale et l'indice de la gaine de la fibre, $\Delta n_2$ la différence entre l'indice de la tranchée enterrée et l'indice de la gaine de la fibre et $\Delta n_3$ la différence entre l'indice de l'anneau et l'indice de la gaine de la fibre. Comme expliqué plus haut, $\Delta n_1$ et $\Delta n_3$ ont une valeur positive, tandis que $\Delta n_2$ a une valeur négative.

On note $r_{1a}$ le rayon extérieur de la partie centrale d'indice sensiblement constant, $r_{1b}$ le rayon intérieur de la tranchée enterrée et $r_1$ le rayon de la partie centrale de la fibre présentant un indice supérieur à l'indice de la gaine; dans le cas d'un profil en rectangle, $r_1$ est le rayon de la partie centrale en rectangle et les rayons $r_{1a}$ et $r_{1b}$ sont égaux . On peut aussi appeler "petite base du trapèze" la partie centrale de rayon $r_{1a}$ et d'indice constant supérieur à l'indice de la gaine. La "grande base du trapèze" correspond au rayon $r_{1b}$ sur la figure, et s'étend jusqu'au rayon intérieur de la tranchée enterrée. On note $r_2$ le rayon extérieur de la partie enterrée - qui est le rayon intérieur de l'anneau - et $r_3$ le rayon extérieur de l'anneau.

Des exemples de fibres présentant ce profil sont donnés dans le tableau qui suit, avec les notations précisées ci-dessus.

Tableau 1

| N° | $r_{1a}/r_{1b}$ | $r_1$ (µm) | $r_2$ (µm) | $r_3$ (µm) | $10^3\Delta n_1$ | $10^3\Delta n_2$ | $10^3\Delta n_3$ |
|---|---|---|---|---|---|---|---|
| 1 | 0,56 | 4,1 | 6,5 | 7,85 | 6,85 | -7,9 | 6,5 |
| 2 | 0,84 | 3,75 | 5,65 | 10,25 | 7,25 | -6,2 | 2,15 |
| 3 | 0,86 | 3,9 | 6,1 | 11,1 | 6,65 | -5,6 | 1,5 |
| 4 | 1 | 4,05 | 6,75 | 8,15 | 6,6 | -5,5 | 6,95 |
| 5 | 1 | 3,7 | 6 | 7,75 | 6,9 | -5,2 | 3,8 |
| 6 | 1 | 3,95 | 6,4 | 9,85 | 6,5 | -4,85 | 1,95 |
| 7 | 1 | 4,15 | 6,75 | 8,7 | 6,1 | -3,65 | 4,25 |
| 8 | 1 | 3,9 | 6,15 | 8,2 | 6,7 | -6,35 | 4,7 |
| 9 | 1 | 4,25 | 6,6 | 9,45 | 6,3 | -5,35 | 3,8 |
| 10 | 1 | 4,2 | 7 | 9,3 | 6,2 | -5,25 | 4,65 |
| 11 | 1 | 3,7 | 6,3 | 10,5 | 7 | -4,55 | 2,1 |
| 12 | 0,89 | 4,1 | 5,9 | 10 | 6,95 | -6,65 | 2,25 |
| 13 | 0,82 | 3,6 | 7,75 | 9,4 | 7 | -2,3 | 4,75 |
| 14 | 0,69 | 4 | 6,55 | 9,2 | 6,75 | -4,65 | 2,65 |
| 15 | 0,74 | 4,35 | 7,15 | 8,85 | 6,3 | -3,75 | 6,05 |
| 16 | 0,8 | 3,9 | 6,05 | 8,55 | 7,45 | -6,85 | 4,7 |
| 17 | 0,84 | 4 | 8,05 | 9,55 | 6,4 | -2,6 | 6,4 |
| 18 | 0,88 | 4,15 | 6,2 | 9,4 | 6,5 | -7,45 | 3,4 |
| 19 | 0,86 | 3,85 | 6,95 | 8,95 | 6,9 | -4,8 | 5,65 |
| 20 | 0,67 | 4 | 5,85 | 9,15 | 6,75 | -7,35 | 2,55 |
| 21 | 0,7 | 3,9 | 7 | 9,2 | 7,15 | -3,5 | 4,5 |
| 22 | 0,68 | 3,8 | 7,4 | 9,15 | 7,3 | -2,95 | 4,75 |

Dans ce tableau, les profils 4 à 11 sont des profils en rectangle et anneau, tandis que les autres profils sont des profils en trapèze et anneau.

Du point de vue du profil, les dimensions de la fibre peuvent être choisies en appliquant l'une ou plusieurs des inégalités données ci-dessous; d'une part, en ce qui concerne la partie centrale en trapèze, on a avantageusement :

- $5,9.10^{-3} \leq \Delta n_1 \leq 7,8.10^{-3}$, et
- $3,5 \leq r_1 \leq 4,5$ µm.

La pente des flancs du trapèze est avantageusement choisie de sorte que le rapport des rayons $r_{1a}$ et $r_{1b}$ soit compris entre 0,4 et 1; la valeur limite de 1 correspond en fait à un profil en "rectangle" avec anneau. Les profils en trapèze présentent l'avantage d'une variation plus progressive de l'indice au voisinage du centre de la fibre; adoucir ainsi la transition entre le centre de la fibre et la tranchée déprimée est avantageux du point de vue de l'atténuation. En outre, il est plus facile, du point de vue de la fabrication d'une préforme, d'obtenir un profil en trapèze qu'un profil en rectangle. De ce point de vue, il est donc intéressant que le rapport soit inférieur à 0,95, voire 0,90. Une limite supérieure encore plus avantageuse est 0,80.

Pour la tranchée enterrée, on peut choisir les valeurs de différence d'indice $\Delta n_2$ et de rayon extérieur $r_2$ de sorte à vérifier :

- $-8.10^{-3} \leq \Delta n_2 \leq -1.10^{-3}$,
- $5,3 \leq r_2 \leq 8,1$ µm,

Pour l'anneau, on peut choisir les valeurs de différence d'indice $\Delta n_3$ et de rayon extérieur $r_3$ de sorte à vérifier :

- $1.10^{-3} \leq \Delta n_3 \leq 8.10^{-3}$,
- $7{,}2 \leq r_3 \leq 11{,}1\ \mu m$,

D'autres caractérisations de la fibre sont possibles. Ainsi, on peut utiliser le paramètre $S_C$ défini par

$$S_C = 2.\int_0^{r_1} \Delta n(r).r.dr$$

Ce paramètre est homogène au produit d'une surface par un indice. Ce paramètre s'applique simplement au profil en trapèze comme au profil en rectangle, et est représentatif de l'augmentation d'indice au voisinage du coeur de la fibre. Il est de préférence compris entre $76.10^{-3}$ et $114.10^{-3}\mu m^2$.

Le paramètre $L_C$ défini par

$$L_C = 2.\int_0^{r_1} \Delta n(r).dr$$

est homogène au produit d'un rayon par un indice. Ce paramètre s'applique simplement au profil en trapèze comme au profil en rectangle, et est représentatif du produit de la valeur moyenne de l'indice par le rayon $r_1$ de la partie centrale; dans le cas d'un profil d'indice en rectangle, ce paramètre vaut $2\Delta n_1.r_1$ ; il est de préférence compris entre $46.10^{-3}$ et $56.10^{-3}\ \mu m^2$.

On peut encore utiliser le paramètre $S_G$, défini par

$$S_G = 2.\int_{r_1}^{r_2} \Delta n(r).r.dr$$

Ce paramètre est encore homogène au produit d'une surface par un indice. Ce paramètre est représentatif de la diminution d'indice dans la tranchée enterrée. Il est de préférence compris entre $-170.10^{-3}$ et $-40.10^{-3}\ \mu m^2$.

De même, le paramètre $S_A$ défini par

$$S_A = 2.\int_{r_2}^{r_3} \Delta n(r).r.dr$$

est homogène au produit d'une surface par un indice, et est représentatif de l'augmentation d'indice dans l'anneau. Il est de préférence compris entre $72.10^{-3}$ et $198.10^{-3}\ \mu m^2$.

Un autre paramètre possible est le paramètre $S_{GA}$, qui s'écrit

$$S_{GA} = 2.\int_{r_1}^{r_3} \Delta n(r).r.dr$$

Ce paramètre est représentatif de l'augmentation moyenne de l'indice, par rapport à l'indice de la silice, sur la tranchée enterrée et l'anneau. Il est de préférence compris entre $-38.10^{-3}$ et $90.10^{-3}\ \mu m^2$.

Un de ces paramètres, ou la combinaison de plusieurs de ces paramètres permettent de définir le profil d'une fibre, qui peut être utilisée comme fibre de ligne.

Les fibres du tableau 1 présentent les caractéristiques de propagation indiquées dans les tableaux 2 et 3 qui suivent, pour des longueurs d'onde de 1460, 1550, 1625 et 1675 nm.

Tableau 2

| N° | $\lambda_{cth}$ nm | $\lambda_0$ nm | $2W_{02}\ \mu$m (1550nm) | C' ps/nm$^2$-km (1550nm) | C/C' nm (1550nm) | $S_{eff}2$/C' $\mu$m$^4$.nm.km/ps (1550nm) | S'$_{eff}$ (%/nm) (1550nm) | $S_{\mu c}$ (1550nm) |
|---|---|---|---|---|---|---|---|---|
| 1 | 1500 | 1325 | 8,15 | 0,034 | 320 | 81000 | 0,11 | < 0,6 |
| 2 | 1800 | 1370 | 8 | 0,023 | 250 | 113000 | 0,14 | < 0,6 |
| 3 | 1760 | 1330 | 8,1 | 0,026 | 360 | 106000 | 0,12 | < 0,8 |
| 4 | 1660 | 1320 | 8,15 | 0,034 | 330 | 85000 | 0,11 | < 0,5 |
| 5 | 1400 | 1360 | 8,05 | 0,031 | 260 | 85000 | 0,12 | < 0,8 |
| 6 | 1630 | 1320 | 8,2 | 0,032 | 340 | 92000 | 0,11 | < 0,7 |
| 7 | 1630 | 1340 | 9 | 0,044 | 250 | 97000 | 0,12 | < 0,8 |
| 8 | 1630 | 1350 | 8,2 | 0,03 | 270 | 100000 | 0,13 | < 0,8 |
| 9 | 1800 | 1330 | 8,7 | 0,037 | 300 | 104000 | 0,12 | < 0,6 |
| 10 | 1800 | 1320 | 8,55 | 0,032 | 340 | 113000 | 0,12 | < 0,8 |
| 11 | 1800 | 1340 | 7,95 | 0,023 | 345 | 114000 | 0,13 | < 0,7 |
| 12 | 1790 | 1320 | 8,2 | 0,034 | 320 | 87000 | 0,11 | < 0,4 |
| 13 | 1740 | 1365 | 8,2 | 0,031 | 255 | 89000 | 0,13 | < 0,8 |
| 14 | 1590 | 1335 | 8,2 | 0,033 | 305 | 85000 | 0,11 | < 0,7 |
| 15 | 1760 | 1335 | 9 | 0,042 | 260 | 99000 | 0,12 | < 0,6 |
| 16 | 1780 | 1350 | 7,95 | 0,029 | 270 | 91000 | 0,13 | < 0,3 |
| 17 | 1840 | 1335 | 8,65 | 0,035 | 295 | 99000 | 0,12 | < 0,7 |
| 18 | 1780 | 1325 | 8,35 | 0,028 | 335 | 115000 | 0,12 | < 0,7 |
| 19 | 1810 | 1340 | 8,1 | 0,024 | 330 | 119000 | 0,13 | < 0,6 |
| 20 | 1640 | 1355 | 8,3 | 0,031 | 260 | 96000 | 0,13 | < 0,8 |
| 21 | 1790 | 1350 | 8,2 | 0,031 | 270 | 90000 | 0,13 | < 0,5 |
| 22 | 1740 | 1360 | 8,05 | 0,029 | 270 | 86000 | 0,13 | < 0,6 |

Tableau 3

| N° | S$_{eff}$ µm² (1460nm) | S$_{eff}$ µm² (1550nm) | S$_{eff}$ µm² (1625nm) | S$_{eff}$ µm² (1675nm) | C ps/(nm.km) (1460nm) | C ps/(nm.km) (1550nm) | C ps/(nm.km) (1625nm) | C ps/(nm.km) (1675nm) | PC10mm dB/km (1550nm) | PC10mm dB/m (1625nm) | PC10mm dB/m (1675nm) | PC30mm dB (1550nm) | PC30mm dB (1625nm) | PC30mm dB (1675nm) |
|---|---|---|---|---|---|---|---|---|---|---|---|---|---|---|
| 1 | 47,9 | 52,6 | 57,4 | 61,2 | 7,3 | 10,8 | 13,2 | 14,6 | 4 | 20 | 48 | $< 10^{-5}$ | $< 2.10^{-4}$ | $< 5.10^{-3}$ |
| 2 | 45,8 | 51,3 | 57,4 | 62,5 | 3,4 | 5,8 | 7,5 | 8,7 | 6 | 30 | 74 | $< 10^{-5}$ | $< 10^{-4}$ | $< 2.10^{-3}$ |
| 3 | 47,7 | 52,4 | 57,6 | 62 | 6,5 | 9,4 | 11,1 | 12 | 15 | 66 | 150 | $< 2.10^{-5}$ | $< 2.10^{-3}$ | $< 5.10^{-2}$ |
| 4 | 49,6 | 54,2 | 59 | 62,9 | 7,5 | 11,0 | 13,4 | 14,9 | 3 | 14 | 35 | $< 10^{-5}$ | $< 10^{-5}$ | $< 2.10^{-4}$ |
| 5 | 46,6 | 51,7 | 57,1 | 61,5 | 4,7 | 7,9 | 10,2 | 11,6 | 13 | 60 | 139 | $< 2.10^{-5}$ | $< 2.10^{-3}$ | $< 5.10^{-2}$ |
| 6 | 49,7 | 54,4 | 59,3 | 63,3 | 7,6 | 10,9 | 13,1 | 14,4 | 14 | 62 | 164 | $< 2.10^{-5}$ | $< 2.10^{-3}$ | $< 2.10^{-2}$ |
| 7 | 58,7 | 65 | 71,6 | 76,7 | 6,8 | 10,9 | 14,1 | 16,2 | 11 | 40 | 100 | $< 10^{-5}$ | $< 5.10^{-4}$ | $< 5.10^{-3}$ |
| 8 | 49,3 | 54,9 | 61 | 65,9 | 4,9 | 7,9 | 10,1 | 11,6 | 11 | 46 | 129 | $< 10^{-5}$ | $< 10^{-3}$ | $< 10^{-2}$ |
| 9 | 56 | 61,7 | 67,8 | 72,7 | 7,3 | 10,9 | 13,6 | 15,3 | 7 | 28 | 64 | $< 10^{-5}$ | $< 5.10^{-5}$ | $< 5.10^{-4}$ |
| 10 | 54,5 | 60 | 66 | 70,9 | 7,6 | 10,9 | 13,2 | 14,6 | 17 | 66 | 117 | $< 10^{-5}$ | $< 5.10^{-4}$ | $< 10^{-2}$ |
| 11 | 45,9 | 50,9 | 56,3 | 60,9 | 5,3 | 7,8 | 9,3 | 10,2 | 11 | 53 | 130 | $< 10^{-5}$ | $< 10^{-3}$ | $< 2.10^{-2}$ |
| 12 | 49,9 | 54,6 | 59,4 | 63,3 | 7,5 | 10,9 | 13,3 | 14,8 | 1,1 | 6 | 16 | $< 10^{-5}$ | $< 10^{-5}$ | $< 2.10^{-5}$ |
| 13 | 46,7 | 52,1 | 58 | 62,7 | 4,6 | 7,8 | 9,9 | 11,3 | 13 | 57 | 130 | $< 2.10^{-5}$ | $< 2.10^{-3}$ | $< 2.10^{-2}$ |
| 14 | 48,1 | 52,9 | 58 | 62,1 | 6,7 | 10,1 | 12,3 | 13,7 | 11 | 48 | 110 | $< 10^{-5}$ | $< 10^{-3}$ | $< 2.10^{-2}$ |
| 15 | 58,4 | 64,9 | 71,5 | 76,7 | 7 | 11,1 | 14,2 | 16,3 | 5 | 21 | 45 | $< 10^{-5}$ | $< 5.10^{-5}$ | $< 5.10^{-4}$ |

| 16 | 46,5 | 51,6 | 57,2 | 61,6 | 5 | 7,9 | 10 | 11,5 | 0,8 | 5 | 13 | $< 10^{-5}$ | $< 10^{-5}$ | $< 10^{-5}$ |
|---|---|---|---|---|---|---|---|---|---|---|---|---|---|---|
| 17 | 53,5 | 59,2 | 65,3 | 70,2 | 6,9 | 10,5 | 13 | 14,6 | 11 | 44 | 97 | $< 10^{-5}$ | $< 5.10^{-4}$ | $< 5.10^{-3}$ |
| 18 | 51,6 | 57,1 | 63,1 | 68 | 6,6 | 9,5 | 11,5 | 12,8 | 10 | 43 | 100 | $< 10^{-5}$ | $< 2.10^{-4}$ | $< 5.10^{-3}$ |
| 19 | 47,8 | 53,3 | 59,3 | 64,4 | 5,3 | 7,9 | 9,6 | 10,7 | 7 | 35 | 83 | $< 10^{-5}$ | $< 2.10^{-4}$ | $< 5.10^{-3}$ |
| 20 | 49 | 54,6 | 60,7 | 65,7 | 4,9 | 8 | 10,2 | 11,7 | 11 | 47 | 105 | $< 10^{-5}$ | $< 10^{-3}$ | $< 2.10^{-2}$ |
| 21 | 47,6 | 52,9 | 58,7 | 63,3 | 5,2 | 8,4 | 10,6 | 12,1 | 4 | 20 | 50 | $< 10^{-5}$ | $< 5.10^{-5}$ | $< 10^{-3}$ |
| 22 | 45,1 | 50,2 | 55,6 | 60,1 | 4,9 | 7,9 | 9,9 | 11,2 | 9 | 45 | 110 | $< 10^{-5}$ | $< 5.10^{-4}$ | $< 10^{-2}$ |

Dans le tableau 2, $\lambda_{cth}$ est la longueur d'onde de coupure théorique de la fibre, exprimée en nanomètres; dans la pratique, la longueur d'onde de coupure mesurée sur câble est inférieure de plusieurs centaines de nm ; on comprend que la fibre est effectivement monomode dans la plage de longueurs d'onde des signaux utiles, notamment dans les bandes C et L, mais plus généralement entre 1300 et 1675 nm.

$\lambda_0$ est la longueur d'onde d'annulation de la longueur d'onde, mesurée en nanomètres. $2W_{02}$ est le diamètre de mode, en micromètres. C est la dispersion chromatique exprimée en ps/(nm.km). C' est la pente de dispersion chromatique, c'est-à-dire la dérivée de la dispersion chromatique par rapport à la longueur d'onde, exprimée en ps/($nm^2$.km); le rapport C/C' de la dispersion chromatique à la pente de dispersion chromatique a donc la dimension d'une longueur d'onde, et est exprimé en nanomètres. $S_{eff}$ est la surface effective, exprimée en $\mu m^2$, et $s_{eff}^2$/C' est donc le rapport du carré de cette surface effective à la pente de dispersion chromatique; cette grandeur est représentative du compromis entre la surface effective (aussi grande que possible) et la pente de dispersion chromatique (aussi faible que possible). $S'_{eff}$ est la dérivée de cette surface effective par rapport à la longueur d'onde, à une valeur de longueur d'onde de 1550 nm; elle est exprimé en %/nm, et est calculée en divisant la dérivée $dS_{eff}/d\lambda$ de la surface effective par rapport à la longueur d'onde à une longueur d'onde de 1550 nm par la valeur $S_{eff}$ de la surface effective à cette longueur d'onde; elle est qualifiée indifféremment de "pente de surface effective" ou encore de "dérivée de la surface effective". Enfin, $S\mu c$ est un coefficient sans dimension, représentatif de la sensibilité de la fibre aux microcourbures; ce coefficient est dans le tableau mesuré par rapport à une fibre de l'état de la technique commercialisée par la demanderesse sous l'appellation ASMF 200. Ce coefficient peut être mesuré par la méthode d'écrasement de la fibre entre deux grilles, connue en soi.

Ces différents paramètres sont tous mesurés à 1550 nm - à l'exception naturellement de la longueur d'onde de coupure et de la longueur d'onde d'annulation de la dispersion chromatique, qui ne sont pas mesurées pour une valeur spécifique de longueur d'onde. La mesure des paramètres optiques des fibres à 1550 nm est représentative des valeurs des différents paramètres sur toute la plage de d'utilisation de la fibre - compte tenu notamment des faibles valeurs des pentes de dispersion chromatique et de surface effective.

Le tableau 3 donne, pour différentes valeurs de la longueur d'onde, les valeurs de la surface effective $S_{eff}$ en $\mu m^2$, de la dispersion chromatique C en ps/(nm.km), et des pertes par courbures mesurées comme indiqué plus haut pour des manchons de 10 et 30 mm de rayon.

Les tableaux montrent que les fibres du tableau 1 présentent des caractéristiques de propagation - dispersion chromatique, rapport de la dispersion chromatique à la pente de dispersion chromatique et pente de surface effective - permettant leur utilisation en tant que fibre de ligne dans un système de transmission à fibre optique, avec de la fibre de compensation classique adaptée à des fibres SMF. Le tableau 3 montre que les fibres présentent des valeurs adaptées sur toute la plage de longueurs d'onde envisagée, de 1460 à 1675 nm.

Dans tous les exemples du tableau 1, des variations de 5 % de l'indice $\Delta n_1$, ou de 10% des indices $\Delta n_2$, $\Delta n_3$ ou $\Delta n_4$ permettent d'obtenir des résultats similaires. Il en est de même des rayons, qui peuvent varier de 10% pour $r_1$ et $r_2$ et de 5% pour $r_3$ par rapport aux valeurs données dans les exemples du tableau 1, tout en obtenant des résultats analogues.

La figure 3 montre un graphe comparant l'utilisation d'une telle fibre selon l'invention et l'utilisation d'une fibre de l'état de la technique. On a porté en abscisse la longueur d'onde et en ordonnée l'écart de la surface effective par rapport à la valeur à une longueur d'onde de 1550 nm. La courbe indiquée par "Ex. 20" correspond à la fibre de l'exemple 20 proposé plus haut; elle présente une pente de section effective de 0,13 %/nm. La courbe indiquée "Art antérieur" correspond à une fibre vendue par la demanderesse sous la marque Teralight, décrite dans la demande de brevet FR-A-2 790 107 et présentant une pente de surface effective de 0,17 %/nm à une longueur d'onde de 1550 nm. Il apparaît nettement sur le graphe que l'amplitude de variation de la surface effective, pour une transmission entre 1460 et 1675 nm, est plus importante dans l'état de la technique que suivant le procédé de l'invention. Les variations par rapport à la valeur à 1550 nm sont de -13,5% à +23,7% avec la fibre de l'état de la technique. Elles ne sont que de -10,3% à +20,1% suivant le procédé de l'invention. En termes de plage de transmission, le procédé permet de transmettre sur une plage de longueurs d'onde de 1460 à 16751 nm, avec les mêmes fluctuations relatives de surface effective qu'une fibre Teralight dans une plage de 1484 à 1657 nm, soit un gain de largeur de bande de 42 nm.

Il est ainsi possible de transmettre des signaux sur une plage de longueurs d'onde étendue, en évitant de traiter indépendamment chaque longueur d'onde du système de transmission. Du point de vue des effets non-linéaires, le concepteur du système n'a pas à se préoccuper de la longueur d'onde; on peut utiliser des sources présentant des caractéristiques identiques pour tous les canaux, des espacements entre canaux identiques sur toute la plage de longueurs d'onde, des débits par canal identiques.

Bien entendu, la présente invention n'est pas limitée aux exemples et modes de réalisation décrits et représentés, mais elle est susceptible de nombreuses variantes accessibles à l'homme de l'art. Ainsi, on pourrait utiliser d'autres profils que ceux proposés dans les exemples du tableau, ou d'autres configurations de systèmes que celle de la figure 1.

**Revendications**

1. Une fibre optique présentant, pour une longueur d'onde de 1550 nm, une dispersion chromatique C comprise entre 5 et 11 ps/nm.km, et un rapport C/C' de la dispersion chromatique à la pente de dispersion chromatique compris entre 250 et 370 nm, comportant un coeur présentant un profil d'indice en trapèze ou rectangle avec tranchée enterrée et un anneau, et une gaine d'indice constant, **caractérisée,**
en ce que la différence ($\Delta n_1$) entre l'indice maximum du trapèze ou rectangle et l'indice de la gaine est comprise entre $5.9.10^{-3}$ et $7,8.10^{-3}$, et en ce que le rayon de la partie centrale de la fibre présentant un indice supérieur à l'indice de la gaine est compris entre 3,5 $\mu$m et 4,5 $\mu$m,
**en ce que** la différence ($\Delta n_2$) entre l'indice de la tranchée enterrée et l'indice de la gaine est comprise entre $-8.10^{-3}$ et $-1.10^{-3}$, et en ce que le rayon extérieur ($r_2$) de la tranchée enterrée est compris entre 5,3 $\mu$m et 8,1 $\mu$m,
**en ce que** la valeur du double de l'intégrale du produit du rayon par l'indice entre un rayon nul et rayon extérieur ($r_1$) de la partie centrale de la fibre présentant un indice supérieur à l'indice de la gaine est comprise entre $76.10^{-3}$ $\mu$m$^2$ et $114.10^{-3}$ $\mu$m$^2$, et
**en ce que** les rayons et les indices de la partie centrale de la fibre, de la tranchée enterrée et de l'anneau étant déterminés de manière à ce que la fibre optique présente, à longueur d'onde de 1550 nm, une dérivée S'$_{eff}$ de la surface effective par rapport à la longueur d'onde inférieure à 0,14 %/nm.

2. La fibre de la revendication 1, présentant la différence ($\Delta n_3$) entre l'indice de l'anneau et l'indice de la gaine étant comprise entre $1.10^{-3}$ et $8.10^{-3}$, et le rayon extérieur ($r_3$) de l'anneau étant compris entre 7,2 $\mu$m et 11,1 $\mu$m.

3. La fibre de la revendication 1 ou 2, présentant le rapport entre le rayon intérieur et le rayon extérieur du trapèze étant supérieur à 0,4.

4. La fibre de la revendication 1, 2 ou 3, présentant le rapport entre le rayon intérieur et le rayon extérieur du trapèze étant inférieur à 0,95, voire inférieur à 0,90, ou de préférence inférieur à 0,80.

5. La fibre de l'une des revendications 1 à 4, présentant la valeur du double de l'intégrale de l'indice entre un rayon nul et le rayon extérieur ($r_3$) de la partie centrale de la fibre présentant un indice supérieur à l'indice de la gaine étant comprise entre $46.10^{-3}$ $\mu$m et $56.10^{-3}$ $\mu$m.

6. La fibre de l'une des revendications 1 à 5, présentant la valeur du double de l'intégrale du produit du rayon par l'indice entre le rayon extérieur ($r_1$) de la partie centrale de la fibre présentant un indice supérieur à l'indice de la gaine et le rayon extérieur ($r_2$) de la tranchée enterrée étant comprise entre $-170.10^{-3}$ $\mu$m$^2$ et $-40.10^{-3}$ $\mu$m$^2$.

7. La fibre de l'une de revendications 2 à 6, présentant la valeur du double de l'intégrale du produit du rayon par l'indice entre le rayon extérieur ($r_2$) de la tranchée enterrée et le rayon extérieur ($r_3$) de l'anneau étant comprise entre $72.10^{-3}$ $\mu$m$^2$ et $198.10^{-3}$ par.

8. La fibre de l'une des revendications 2 à 7, présentant la valeur du double de l'intégrale du produit du rayon par l'indice entre le rayon extérieur ($r_1$) de la partie centrale de la fibre présentant un indice supérieur à l'indice de la gaine et le rayon extérieur ($r_1$) de l'anneau étant compri se entre $-38.10^{-3}$ $\mu$m$^2$ et $90.10^{-3}$ $\mu$m$^2$.

9. La fibre de l'une des revendications 1 à 8, étant monomode en câble, dans une plage de longueurs d'onde à partir de 1460 nm, et de préférence à partir de 1300 nm.

10. La fibre de l'une des revendications 1 à 9, présentant une longueur d'onde de coupure théorique inférieure ou égale à 1850 nm et de préférence inférieure ou égale à 1800 nm.

11. La fibre de l'une des revendications 1 à 10, présentant une longueur d'onde $\lambda_0$ d'annulation de la dispersion chromatique inférieure ou égale à 1370 nm.

12. La fibre de l'une des revendications 1 à 11, présentant à une longueur d'onde de 1550 nm une surface effective supérieure ou égale à 50 $\mu$m$^2$.

13. La fibre de l'une des revendications 1 à 12, présentant à une longueur d'onde de 1460 nm une surface effective supérieure ou égale à 45 $\mu$m$^2$.

**14.** La fibre de l'une des revendications 1 à 13, présentant des pertes par courbure inférieures ou égales à 400 dB/m pour un enroulement autour d'un manchon de 10 mm de rayon, pour une longueur d'onde de 1625 nm, et de préférence pour une longueur d'onde de 1675 nm.

**15.** La fibre de l'une des revendications 1 à 14, présentant des pertes par courbure inférieures à 0,5 dB, et de préférence inférieures à 5.10⁻² dB, pour une longueur d'onde de 1625 nm, et de préférence pour une longueur d'onde de 1675 nm, pour un enroulement de 100 tours sur un manchon de 30 mm de rayon.

**16.** La fibre de l'une des revendications 1 à 15, présentant à une longueur d'onde de 1550 nm une dispersion modale de polarisation inférieure ou égale à 0,1 ps/km$^{1/2}$ et de préférence 0,05 ps/km$^{1/2}$.

**17.** La fibre de l'une des revendications 1 à 16, présentant à une longueur d'onde de 1550 nm une atténuation inférieure à 0,24 dB/km, voire à 0,22 dB/km.

**18.** La fibre de l'une des revendications 1 à 17, présentant à une longueur d'onde de 1550 nm un rapport du carré de la surface effective à la pente de dispersion chromatique supérieur ou égal à 80 000 $\mu$m$^4$.nm.km/ps.

**19.** La fibre de l'une des revendications 1 à 18, présentant à une longueur d'onde de 1550 nm une sensibilité aux microcourbures inférieure à 1 et de préférence inférieure à 0,8.

**Claims**

**1.** An optical fibre having, for a wavelength of 1550 nm, a chromatic dispersion C of between 5 and 11 ps/nm.km, inclusive, and a ratio C/C' of chromatic dispersion to chromatic dispersion slope of between 250 and 370 nm, inclusive, comprising a core having an index profile in the shape of a trapezium or rectangle with a depressed trench and a ring, and a cladding of constant index, **characterised**
in that the difference ($\Delta n_1$) between the maximum index of the trapezium or rectangle and the index of the cladding is between 5.9 x 10⁻³ and 7.8 x 10⁻³, inclusive, and in that the radius of the central portion of the fibre having an index greater than the index of the cladding is between 3.5 $\mu$m and 4.5 $\mu$m, inclusive,
**in that** the difference ($\Delta n_2$) between the index of the depressed trench and the index of the cladding is between -8 x 10⁻³ and -1 x 10⁻³, inclusive, and in that the outer radius ($r_2$) of the depressed trench is between 5.3 $\mu$m and 8.1 $\mu$m, inclusive,
**in that** the value of double the integral of the product of the radius and the index between zero radius and the outer radius ($r_1$) of the central portion of the fibre having an index greater than the index of the cladding is between 76 x 10⁻³ $\mu$m² and 114 x 10⁻³ $\mu$m², inclusive, and
**in that** the radii and indices of the central portion of the fibre, of the depressed trench and of the ring are so determined that the optical fibre has, at a wavelength of 1550 nm, a derivative S'$_{eff}$ of the effective surface area with respect to wavelength of less than 0.14 %/nm.

**2.** The fibre of claim 1, wherein the difference ($\Delta n_3$) between the index of the ring and the index of the cladding is between 1 x 10⁻³ and 8 x 10⁻³, inclusive, and the outer radius ($r_3$) of the ring is between 7.2 $\mu$m and 11.1 $\mu$m, inclusive.

**3.** The fibre of claim 1 or 2, wherein the ratio between the inner radius and the outer radius of the trapezium is greater than 0.4.

**4.** The fibre of claim 1, 2 or 3, wherein the ratio between the inner radius and the outer radius of the trapezium is less than 0.95, optionally less than 0.90, or preferably less than 0.80.

**5.** The fibre of one of claims 1 to 4, wherein the value of double the integral of the index between zero radius and the outer radius ($r_1$) of the central portion of the fibre having an index greater than the index of the cladding is between 46 x 10⁻³ $\mu$m and 56 × 10⁻³ $\mu$m, inclusive.

**6.** The fibre of one of claims 1 to 5, wherein the value of double the integral of the product of the radius and the index between the outer radius ($r_1$) of the central portion of the fibre having an index greater than the index of the cladding and the outer radius ($r_2$) of the depressed trench is between -170 x 10⁻³ $\mu$m² and -40 x 10⁻³ $\mu$m², inclusive

**7.** The fibre of one of claims 2 to 6, wherein the value of double the integral of the product of the radius and the index between the outer radius ($r_2$) of the depressed trench and the outer radius ($r_3$) of the ring is between 72 x 10$^{-3}$ $\mu$m$^2$ and 198 x 10$^{-3}$ $\mu$m$^2$, inclusive.

8.  The fibre of one of claims 2 to 7, wherein the value of double the integral of the product of the radius and the index between the outer radius ($r_1$) of the central portion of the fibre having an index greater than the index of the cladding and the outer radius ($r_3$) of the ring is between -38 x 10$^{-3}$ $\mu$m$^2$ and 90 x 10$^{-3}$ $\mu$m$^2$, inclusive.

9.  The fibre of one of claims 1 to 8, which is single-mode in cable, in a wavelength range starting from 1460 nm, and preferably starting from 1300 nm.

10. The fibre of one of claims 1 to 9, which has a theoretical cut-off wavelength of less than or equal to 1850 nm, and preferably less than or equal to 1800 nm.

11. The fibre of one of claims 1 to 10, which has a zero-chromatic-dispersion wavelength $\lambda_0$ of less than or equal to 1370 nm.

12. The fibre of one of claims 1 to 11, which has, at a wavelength of 1550 nm, an effective surface area greater than or equal to 50 $\mu$m$^2$.

13. The fibre of one of claims 1 to 12, which has, at a wavelength of 1460 nm, an effective surface area greater than or equal to 45 $\mu$m$^2$.

14. The fibre of one of claims 1 to 13, which has bending losses of less than or equal to 400 dB/m for a winding around a sleeve of 10 mm radius for a wavelength of 1625 nm, and preferably for a wavelength of 1675 nm.

15. The fibre of one of claims 1 to 14, which has bending losses of less than 0.5 dB, and preferably less than 5 x 10$^{-2}$ dB, for a wavelength of 1625 nm, and preferably for a wavelength of 1675 nm, for a winding of 100 turns around a sleeve of 30 mm radius.

16. The fibre of one of claims 1 to 15, which has, at a wavelength of 1550 nm, a polarisation mode dispersion of less than or equal to 0.1 ps/km$^{1/2}$, and preferably 0.05 ps/km$^{1/2}$.

17. The fibre of one of claims 1 to 16, which has, at a wavelength of 1550 nm, an attenuation of less than 0.24 dB/km, optionally less than 0.22 dB/km.

18. The fibre of one of claims 1 to 17, which has, at a wavelength of 1550 nm, a ratio of the square of the effective surface area to the chromatic dispersion slope which is greater than or equal to 80,000 $\mu$m$^4$.nm.km/ps.

19. The fibre of one of claims 1 to 18, which has, at a wavelength of 1550 nm, a sensitivity to microbending of less than 1 and preferably less than 0.8.

**Patentansprüche**

1.  Optische Faser, welche für eine Wellenlänge von 1550 nm eine zwischen 5 und 11 ps/nm·km enthaltene chromatische Dispersion C und ein zwischen 250 und 370 nm enthaltenes Verhältnis C/C' der chromatischen Dispersion zu der Steigung der chromatischen Dispersion aufweist, umfassend einen Kern, welcher ein trapez- oder rechteckförmiges Indexprofil mit einem tiefliegenden Einschnitt und einem Ring und eine Hülle mit konstantem Index aufweist, **dadurch gekennzeichnet,**
    **dass** die Differenz ($\Delta n_1$) zwischen dem maximalen Index des Trapezes oder Rechtecks und dem Index der Hülle zwischen 5,9·10$^{-3}$ und 7,8·10$^{-3}$ enthalten ist und dass der Radius des mittleren Teils der Faser, welcher einen größeren Index als der Index der Hülle aufweist, zwischen 3,5 $\mu$m und 4,5 $\mu$m enthalten ist,
    **dass** die Differenz ($\Delta n_2$) zwischen dem Index des tiefliegenden Einschnitts und dem Index der Hülle zwischen -8.10$^{-3}$ und -1·10$^{-3}$ enthalten ist und dass der äußere Radius ($r_2$) des tiefliegenden Einschnitts zwischen 5,3 $\mu$m und 8,1 $\mu$m enthalten ist,
    **dass** der Wert des Zweifachen des Integrals des Produktes des Radius mit dem Index zwischen einem Radius von 0 und dem äußeren Radius ($r_1$) des mittleren Teils der Faser, welcher einen größeren Index als der Index der Hülle aufweist, zwischen 76·10$^{-3}$ $\mu$m$^2$ und 114·10$^{-3}$ pm$^2$ enthalten ist, und

**dass** die Radien und die Indizes des mittleren Teils der Faser, des tiefliegenden Einschnitts und des Ringes derart bestimmt sind, dass die optische Faser bei einer Wellenlänge von 1550 nm eine Ableitung S'$_{eff}$ der effektiven Fläche nach der Wellenlänge von weniger als 0,14 %/nm aufweist.

2. Faser nach Anspruch 1, wobei die Differenz ($\Delta n_3$) zwischen dem Index des Ringes und dem Index der Hülle zwischen $1 \cdot 10^{-3}$ und $8 \cdot 10^{-3}$ enthalten ist und der äußere Radius ($r_3$) des Ringes zwischen 7,2 $\mu$m und 11,1 $\mu$m enthalten ist.

3. Faser nach Anspruch 1 oder 2, wobei das Verhältnis zwischen dem inneren Radius und dem äußeren Radius des Trapezes größer als 0,4 ist.

4. Faser nach Anspruch 1, 2 oder 3, wobei das Verhältnis zwischen dem inneren Radius und dem äußeren Radius des Trapezes kleiner als 0,95, kleiner als 0,90 oder vorzugsweise sogar kleiner als 0,80 ist.

5. Faser nach einem der Ansprüche 1-4, wobei der Wert des Zweifachen des Integrals des Index zwischen einem Radius von 0 und dem äußeren Radius ($r_1$) des mittleren Teils der Faser, welcher einen größeren Index als der Index der Hülle aufweist, zwischen $46 \cdot 10^{-3}$ $\mu$m und $56 \cdot 10^{-3}$ $\mu$m enthalten ist.

6. Faser nach einem der Ansprüche 1-5, wobei der Wert des Zweifachen des Integrals des Produktes des Radius mit dem Index zwischen dem äußeren Radius ($r_1$) des mittleren Teils der Faser, welcher einen größeren Index als der Index der Hülle aufweist, und dem äußeren Radius ($r_2$) des tiefliegenden Einschnitts zwischen $-170 \cdot 10^{-3}$ $\mu$m$^2$ und $-40 \cdot 10^{-3}$ $\mu$m$^2$ enthalten ist.

7. Faser nach einem der Ansprüche 2-6, wobei der Wert des Zweifachen des Integrals des Produktes des Radius mit dem Index zwischen dem äußeren Radius ($r_2$) des tiefliegenden Einschnitts und dem äußeren Radius ($r_3$) des Ringes zwischen $72.10^{-3}$ $\mu$m$^2$ und $198 \cdot 10^{-3}$ $\mu$m$^2$ enthalten ist.

8. Faser nach einem der Ansprüche 2-7, wobei der Wert des Zweifachen des Integrals des Produktes des Radius mit dem Index zwischen dem äußeren Radius ($r_1$) des mittleren Teils der Faser, welcher einen größeren Index als der Index der Hülle aufweist, und dem äußeren Radius ($r_3$) des Ringes zwischen $-38 \cdot 10^{-3}$ $\mu$m$^2$ und $90 \cdot 10^{-3}$ um$^2$ enthalten ist.

9. Faser nach einem der Ansprüche 1-8, welche in einem Wellenlängenbereich ab 1460 nm und vorzugsweise ab 1300 nm im Kabel einmodig ist.

10. Faser nach einem der Ansprüche 1-9, welche eine theoretische Grenzwellenlänge aufweist, welche kleiner oder gleich 1850 nm und vorzugsweise kleiner oder gleich 1800 nm ist.

11. Faser nach einem der Ansprüche 1-10, welche eine Wellenlänge $\lambda_0$ einer Aufhebung der chromatischen Dispersion aufweist, welche kleiner oder gleich 1370 nm ist.

12. Faser nach einem der Ansprüche 1-11, welche bei einer Wellenlänge von 1550 nm eine effektive Fläche aufweist, welche größer oder gleich 50 $\mu$m$^2$ ist.

13. Faser nach einem der Ansprüche 1-12, welche bei einer Wellenlänge von 1460 nm eine effektive Fläche aufweist, welche größer oder gleich 45 $\mu$m$^2$ ist.

14. Faser nach einem der Ansprüche 1-13, welche Krümmungsverluste aufweist, welche bei einem Aufrollen um eine Hülse von 10 mm Radius für eine Wellenlänge von 1625 nm und vorzugsweise für eine Wellenlänge von 1675 nm Krümmungsverluste aufweist, welche kleiner oder gleich 400 dB/m sind.

15. Faser nach einem der Ansprüche 1-14, welche bei einem Aufrollen um 100 Wicklungen auf einer Hülse von 30 mm Radius für eine Wellenlänge von 1625 nm und vorzugsweise für eine Wellenlänge von 1675 nm Krümmungsverluste aufweist, welche kleiner als 0,5 dB und vorzugsweise kleiner als $5 \cdot 10^{-2}$ dB sind.

16. Faser nach einem der Ansprüche 1-15, welche bei einer Wellenlänge von 1550 nm eine Polarisationsmodendispersion aufweist, welche kleiner oder gleich 0,1 ps/km$^{1/2}$ und vorzugsweise 0,05 ps/km$^{1/2}$ ist.

17. Faser nach einem der Ansprüche 1-16, welche bei einer Wellenlänge von 1550 nm eine Dämpfung aufweist, welche kleiner als 0,24 dB/km oder sogar 0,22 dB/km ist.

**18.** Faser nach einem der Ansprüche 1-17, welche bei einer Wellenlänge von 1550 nm ein Verhältnis des Quadrats der effektiven Fläche zu der Steigung der chromatischen Dispersion aufweist, welche größer oder gleich 80000 $\mu$m$^4$·nm·km/ps ist.

**19.** Faser nach einem der Ansprüche 1-18, welche bei einer Wellenlänge von 1550 nm eine Empfindlichkeit gegenüber Mikrokrümmungen aufweist, welche kleiner als 1 und vorzugsweise kleiner als 0,8 ist.

EP 1 288 682 B1

Fig. 1

Fig. 2